(19) Europäisches Patentamt
European Patent Office
Office européen des brevets

(11) **EP 4 486 029 A1**

(12) **EUROPEAN PATENT APPLICATION**
published in accordance with Art. 153(4) EPC

(43) Date of publication:
**01.01.2025 Bulletin 2025/01**

(21) Application number: **22927687.8**

(22) Date of filing: **23.02.2022**

(51) International Patent Classification (IPC):
***H04W 68/02*** (2009.01)

(52) Cooperative Patent Classification (CPC):
**H04W 68/02;** Y02D 30/70

(86) International application number:
**PCT/CN2022/077484**

(87) International publication number:
**WO 2023/159396 (31.08.2023 Gazette 2023/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **FU, Ting**
**Beijing 100085 (CN)**

(74) Representative: **Dehns Germany Partnerschaft mbB**
**Theresienstraße 6-8**
**80333 München (DE)**

(54) **METHOD AND APPARATUS FOR DETERMINING WAKE UP SIGNAL SEQUENCE, DEVICE AND STORAGE MEDIUM**

(57) The present disclosure provides a method and apparatus for determining a wake up signal sequence, a device and a storage medium. The method comprises: determining first information carried in a wake up signal sequence, the first information comprising information indicating an index of a paging occasion corresponding to a wake up signal. By using the above method, a user device is able to accurately distinguish whether a received wake up signal corresponds to a paging occasion corresponding to said user device.

First information carried by the wake up signal sequence is determined, and the first information includes information indicating an index of a paging occasion corresponding to the wake up signal — 101

FIG. 1

**Description**

**TECHNICAL FIELD**

The present disclosure relates to the field of wireless communications, and more particularly, to a method, an apparatus, a device, and a storage medium for determining a wake up signal sequence.

**BACKGROUND**

A low power consumption wake up signal (WUS) studied by R18 can be used to save energy in an idle state. A user equipment (UE) needs to monitor a WUS before a corresponding paging occasion (PO) and determines whether to perform the PO monitoring according to indication of the WUS. From the viewpoint of a network, in order to save resources occupied by sending WUS, one WUS can be made to correspond to a plurality of consecutive POs where the plurality of POs may correspond to different UE groups. Thus, only one WUS needs to be sent for the plurality of POs.

**SUMMARY**

In view of the above, the present disclosure provides a method, an apparatus, a device, and a storage medium for determining a wake up signal sequence.

According to a first aspect of an embodiment of the present disclosure, there is provided a method for determining a wake up signal sequence, performed by a user equipment, including:
determining first information carried by the wake up signal sequence, the first information including information indicating an index of a paging occasion corresponding to the wake up signal.

In an embodiment, in response to the wake up signal corresponding to a plurality of paging occasions, the first information includes information indicating an index of one paging occasion of the plurality of paging occasions to which the wake up signal corresponds.

In an embodiment, in response to the wake up signal corresponding to a plurality of paging occasions, the first information includes information indicating an index of a first paging occasion of the plurality of paging occasions to which the wake up signal corresponds.

In an embodiment, in response to $N_{WUS-PO}$ being less than or equal to $N_s$ and the $N_{WUS-PO}$ being a factor of the $N_s$, the index of the first paging occasion of the plurality of paging occasions is:

$$i\_s - i\_s \bmod N_{WUS-PO} ;$$

wherein, the $N_{WUS-PO}$ is a number of the plurality of paging occasions corresponding to the wake up signal, $N_s$ is a number of one or more paging occasions included in one paging frame in a paging cycle of the user equipment, the $i\_s$ is an index of the paging occasion corresponding to the user equipment, and the $N_{WUS-PO}$ and the $N_s$ are both positive integers greater than or equal to 1.

In an embodiment, in response to $N_{WUS-PO}$ being greater than $N_s$ and the $N_{WUS-PO}$ being an integer multiple of the $N_s$, the index of the first paging occasion of the plurality of paging occasions is 0;
wherein, the $N_{WUS-PO}$ is a number of the plurality of paging occasions corresponding to the wake up signal, the $N_s$ is a number of the one or more paging occasions included in one paging frame in a paging cycle of the user equipment, the $N_{WUS-PO}$ and the $N_s$ are both positive integers greater than or equal to 1.

In an embodiment, the first information includes information indicating a system frame number of a paging frame, wherein the paging occasion corresponding to the wake up signal corresponds to the paging frame.

In an embodiment, in response to that the plurality of paging occasions corresponding to the wake up signal correspond to a plurality of paging frames, the first information includes information indicating a system frame number of one paging frame of the plurality of paging frames.

In an embodiment, the first information includes information indicating a system frame number of a first paging frame of the plurality of paging frames.

In an embodiment, in response to $N_{WUS-PO}$ being greater than $N_s$ and the $N_{WUS-PO}$ being an integer multiple of the $N_s$, the system frame number of the first paging frame of the plurality of paging frames is:

$$SFN_{UE} - \left\lfloor i_{PO} / N_S \right\rfloor \times T / N ;$$

wherein, the $i_{PO} = ((UE\_ID \bmod N) \times N_s + i\_s) \bmod N_{WUS\text{-}PO}$, and the $SFN_{UE}$ is a system frame number of a paging frame corresponding to the user equipment, the $N_{WUS\text{-}PO}$ is a number of the paging occasions corresponding to the wake up signal, the $N_s$ is a number of one or more paging occasions included in one paging frame in a paging cycle of the user equipment, the $i\_s$ is an index of the paging occasion corresponding to the user equipment, the T is duration of the paging cycle of the user equipment, the N is a number of one or more paging frames in the paging cycle, and the UE_ID is a serial number used for identifying the user equipment, and the $N_{WUS\text{-}PO}$ and the $N_s$ are both positive integers greater than or equal to 1.

In an embodiment, $N_{WUS\text{-}PO}$ is a factor or integer multiple of $N_s$, wherein, the $N_{WUS\text{-}PO}$ is a number of the paging occasions corresponding to the wake up signal, the $N_s$ is a number of the one or more paging occasions included in one paging frame in a paging cycle of the user equipment, and the $N_{WUS\text{-}PO}$ and the $N_s$ are both positive integers greater than or equal to 1.

In an embodiment, the determining first information carried by the wake up signal sequence includes:

determining an initialized scrambling sequence corresponding to the wake up signal sequence;

determining the first information carried by the initialized scrambling sequence.

According to a second aspect of an embodiment of the present disclosure, there is provided an apparatus for determining a wake up signal sequence, applied to user equipment, including:

a processing module, configured to determine first information carried by a wake up signal sequence, the first information including information indicating an index of a paging occasion corresponding to the wake up signal.

According to a third aspect of an embodiment of the present disclosure, there is provided a mobile terminal including:

a processor;

a memory, for storing processor-executable instructions;

wherein the processor is configured to execute executable instructions in the memory to implement the steps of the method for determining a wake up signal sequence described above.

According to a fourth aspect of an embodiment of the present disclosure, there is provided a non-transitory computer-readable storage medium having stored thereon executable instructions which, when executed by a processor, carry out the above-described steps of determining a wake up signal sequence.

The technical solutions provided by the embodiments of the present disclosure may include the following advantageous effects.

A user equipment can determine a paging occasion corresponding to a wake up signal according to the wake up signal so that in the case where monitoring periods of wake up signals corresponding to a plurality of paging occasions overlap, the user equipment can accurately distinguish whether a received wake up signal corresponds to the paging occasion corresponding to the present user equipment.

It is to be understood that both the foregoing general description and the following detailed description are for example and explanation only and are not to restrict the present disclosure.

## BRIEF DESCRIPTION OF DRAWINGS

The accompanying drawings, which are included to provide a further understanding of the embodiments of the disclosure and are incorporated in and constitute a part of this application, illustrate embodiments of the disclosure and together with the description serve to explain the embodiments of the disclosure and do not constitute an undue limitation on the embodiments of the disclosure. In the drawings:

the accompanying drawings, which are incorporated in and constitute a part of this specification, illustrate embodiments consistent with the embodiments of the disclosure and, together with the description, serve to explain the principles of the embodiments of the disclosure.

FIG. 1 is a flow chart of a method for determining a wake up signal sequence according to an exemplary embodiment;

FIG. 2 is a flow chart of a method for determining a wake up signal sequence according to an exemplary embodiment;

FIG. 3 is a flow chart of a method for determining a wake up signal sequence according to an exemplary embodiment;

FIG. 4 is a block diagram of an apparatus for determining a wake up signal sequence according to an exemplary embodiment;

FIG. 5 is a block diagram of an appratus for determining a wake up signal sequence according to an exemplary embodiment; and

FIG. 6 is a block diagram of an appratus for determining a wake up signal sequence according to an exemplary embodiment.

## DETAILED DESCRIPTION

Reference will now be made in detail to the embodiments of the present disclosure, examples of which are illustrated in the accompanying drawings and detailed description.

Reference will now be made in detail to embodiments, examples of which are illustrated in the accompanying drawings. Where the following description refers to the accompanying drawings, like numbers in different drawings indicate the same or similar elements, unless otherwise indicated. The embodiments described in the following illustrative examples do not represent all embodiments consistent with the embodiments of the present disclosure. Rather, they are merely examples of apparatuses and methods consistent with some aspects of the present disclosure as detailed in the appended claims.

It should be noted that a plurality of steps may be included in one embodiment of the present disclosure. For ease of description, these steps are numbered. However, these numbers do not define an execution time slot and execution order between steps. Instead, these steps may be performed in any order and are not limited by the the disclosed embodiments.

In the description of the present application, the words "first", "second", "third", and the like are used to distinguish only and are not to be construed as indicating or implying relative importance or order. "A plurality of" means two or more.

"And/or", describing an associated relationship of associated objects, indicates that three relationships may exist, for example, A and/or B, may indicate that there are three cases of A alone, A and B together, and B alone.

In R18 LP WUS, if one WUS corresponds to one or more consecutive POs, and the one or more POs are in one or more consecutive DRX periods and correspond to the same or different UEs.

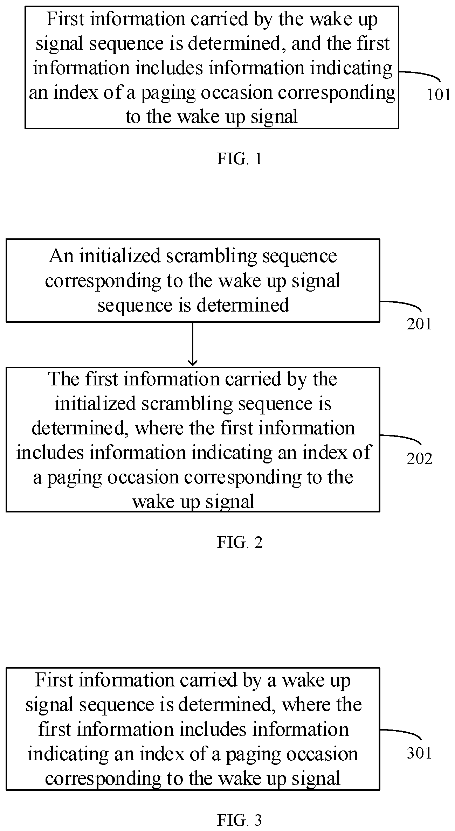

Embodiments of the present disclosure provide a method for determining a wake up signal sequence, which is applied to a user equipment. FIG. 1 is a flow chart of a method for determining a wake up signal sequence according to an example, as shown in FIG. 1, the method includes:

step 101, first information carried by the wake up signal sequence is determined, and the first information includes information indicating an index of a paging occasion corresponding to the wake up signal.

In an embodiment, after receiving the wake up signal sequence, the user equipment determines the first information carried in the wake up signal sequence, the first information including information indicating an index of a paging occasion corresponding to the wake up signal.

The first information refers to a kind of information, and "first" herein does not imply a limitation on the order of occurrence or importance of the kind of information.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence, which is performed by a user equipment. The method includes:

first information carried by the wake up signal sequence is determined, and in response to the wake up signal corresponding to a plurality of paging occasions, the first information includes information indicating an index of one paging occasion of the plurality of paging occasions corresponding to the wake up signal.

In an embodiment, after receiving the wake up signal sequence, the user equipment determines first information carried in the wake up signal sequence, and in a scenario where the wake up signal corresponds to a plurality of paging occasions, the first information includes information indicating an index of one of the plurality of paging occasions corresponding to the wake up signal. Namely, in this scenario, the user equipment can determine a paging occasion corresponding to the wake up signal based on the first information so as to judge whether the wake up signal is a wake up signal of the present UE.

In an embodiment, after receiving the wake up signal sequence, the user equipment determines first information carried in the wake up signal sequence, and in a scenario where the wake up signal corresponds to a plurality of paging occasions, the first information includes information indicating an index of a first paging occasion of the plurality of paging occasions corresponding to the wake up signal.

In an embodiment, after receiving the wake up signal sequence, the user equipment determines first information carried in the wake up signal sequence, and in a scenario where the wake up signal corresponds to a plurality of paging occasions, the first information includes information indicating an index of a last paging occasion in the plurality of paging occasions corresponding to the wake up signal.

In an embodiment, the user equipment determines that the wake up signal corresponds to a plurality of paging occasions based on system configuration information received from a network equipment. In an embodiment, the user equipment determines that the wake up signal corresponds to a plurality of paging occasions based on an agreement of the communication protocol.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence, which is performed by a user equipment. The method includes:

first information carried by the wake up signal sequence is determined, and in response to the wake up signal corresponding to a plurality of paging occasions, the first information includes information indicating an index of a first paging occasion of the plurality of paging occasions corresponding to the wake up signal.

In an embodiment, after receiving the wake up signal sequence, the user equipment determines first information carried in the wake up signal sequence, and in a scenario where the wake up signal corresponds to a plurality of paging occasions, the first information includes information indicating an index of a first paging occasion of the plurality of paging occasions corresponding to the wake up signal. Namely, in this scenario, the user equipment can determine a paging occasion corresponding to the wake up signal based on the first information so as to judge whether the wake up signal is a wake up signal of the present UE.

In an embodiment, the user equipment determines that the wake up signal corresponds to a plurality of paging occasions based on system configuration information received from the network equipment. In an embodiment, the user equipment determines that the wake up signal corresponds to a plurality of paging occasions based on an agreement of the communication protocol.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence, which is performed by a user equipment. The method includes:

first information carried by the wake up signal sequence is determined, and in response to the wake up signal corresponding to a plurality of paging occasions, the first information includes information indicating an index of a first paging occasion of the plurality of paging occasions corresponding to the wake up signal;

and, in response to $N_{WUS\text{-}PO}$ being less than or equal to $N_s$ and $N_{WUS\text{-}PO}$ being a factor of $N_s$, the index of the first paging occasion of the plurality of paging occasions is:

$$i\_s - i\_s \bmod N_{WUS-PO} ,$$

where, the $N_{WUS\text{-}PO}$ is a number of the paging occasions corresponding to the wake up signal, the $N_s$ is a number of paging occasions included in one paging frame in a paging cycle of the user equipment, the $i\_s$ is an index of the paging occasion corresponding to the user equipment, and the $N_{WUS\text{-}PO}$ and the $N_s$ are both positive integers greater than or equal to 1.

In an embodiment, after receiving the wake up signal sequence, the user equipment determines first information carried in the wake up signal sequence, and in a scenario where the wake up signal corresponds to a plurality of paging occasions, the first information includes information indicating an index of a first paging occasion of the plurality of paging occasions corresponding to the wake up signal. In the case where the number $N_{WUS\text{-}PO}$ of the paging occasions corresponding to the wake up signal is less than or equal to the number $N_s$ of the paging occasions included in one paging frame in the paging cycle of the user equipment, and the $N_{WUS\text{-}PO}$ is a factor of the $N_s$, that is to say, in the case where the wake up signal corresponds to one paging frame, the index of the first paging occasion of the plurality of paging occasions can be obtained by calculation according to the following formula:

$$i\_s - i\_s \bmod N_{WUS-PO} \ ;$$

where, the $N_{WUS-PO}$ is the number of the paging occasions corresponding to the wake up signal, the $N_s$ is the number of paging occasions included in one paging frame in a paging cycle of the user equipment, the $i\_s$ is an index of the paging occasion corresponding to the user equipment, and the $N_{WUS-PO}$ and the $N_s$ are both positive integers greater than or equal to 1.

The user equipment determines the paging occasion corresponding to the wake up signal by calculating the first paging occasion of the plurality of paging occasions corresponding to the wake up signal through the above-mentioned formula so as to judge whether the wake up signal is a wake up signal corresponding to the present user equipment.

In an embodiment, the user equipment determines a value of the $N_{WUS-PO}$ based on system configuration information received from a network equipment. In an embodiment, the user equipment determines the value of the $N_{WUS-PO}$ based on an agreement of the communication protocol. In an embodiment, the user equipment determines a value of the $N_s$ based on the system configuration information received from the network equipment. In an embodiment, the user equipment determines a value of $i\_s$ based on the system configuration information received from the network equipment and a UE_ID of the user equipment itself.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence, which is performed by a user equipment. The method includes:

first information carried by the wake up signal sequence is determined, and in response to the wake up signal corresponding to a plurality of paging occasions, the first information includes information indicating an index of a first paging occasion of the plurality of paging occasions corresponding to the wake up signal;

and, in response to $N_{WUS-PO}$ being greater than $N_s$ and the $N_{WUS-PO}$ being an integer multiple of the $N_s$, the index of the first paging occasion of the plurality of paging occasions is 0;

where, the $N_{WUS-PO}$ is a number of paging occasions corresponding to the wake up signal, the $N_s$ is a number of the paging occasions included in one paging frame in a paging cycle of the user equipment, the $N_{WUS-PO}$ and the $N_s$ are both positive integers greater than or equal to 1.

In an embodiment, after receiving the wake up signal sequence, the user equipment determines first information carried in the wake up signal sequence, and in a scenario where the wake up signal corresponds to a plurality of paging occasions, the first information includes information indicating an index of a first paging occasion of the plurality of paging occasions corresponding to the wake up signal. In the case where the number $N_{WUS-PO}$ of the paging occasions corresponding to the wake up signal is greater than the number $N_s$ of the paging occasions included in one paging frame in the paging cycle of the user equipment and the $N_{WUS-PO}$ is an integer multiple of the $N_s$, the index of the first paging occasion in the plurality of paging occasions is 0.

The user equipment determines a paging occasion corresponding to the wake up signal through a first paging occasion of a plurality of paging occasions corresponding to the wake up signal so as to judge whether the wake up signal is a wake up signal corresponding to the present user equipment.

In an embodiment, the user equipment determines the value of $N_{WUS-PO}$ based on system configuration information received from the network equipment. In an embodiment, the user equipment determines the value of $N_{WUS-PO}$ based on an agreement of the communication protocol. In an embodiment, the user equipment determines the value of $N_s$ based on system configuration information received from the network equipment.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence, which is performed by a user equipment. The method includes:

> determining first information carried by the wake up signal sequence, where the first information includes information indicating an index of a paging occasion corresponding to the wake up signal;
>
> and the first information includes information indicating a system frame number of a paging frame, where a paging occasion corresponding to the wake up signal corresponds to the paging frame.

In an embodiment, after receiving the wake up signal sequence, the user equipment determines first information carried in the wake up signal sequence, the first information including information indicating an index of a paging occasion corresponding to the wake up signal and information indicating a system frame number of a paging frame. Wherein the paging occasion corresponding to the wake up signal corresponds to the above-mentioned paging frame. That is, the first information includes information indicating a system frame number of a paging frame corresponding to the paging occasion, in addition to information indicating an index of the paging occasion.

Note that there is a plurality of paging frames in a paging cycle of a UE, and one paging frame corresponds to a plurality of paging occasions.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence, which is performed by a user equipment. The method includes:

> first information carried by the wake up signal sequence is determined, and in response to the wake up signal corresponding to a plurality of paging occasions, the first information includes information indicating an index of one paging occasion of the plurality of paging occasions corresponding to the wake up signal;
>
> and, in response to that the plurality of paging occasions corresponding to the wake up signal correspond to a plurality of paging frames, the first information includes information indicating a system frame number of one paging frame of the plurality of paging frames.

In an embodiment, after receiving the wake up signal sequence, the user equipment determines first information carried in the wake up signal sequence, and in a scenario where the wake up signal corresponds to a plurality of paging occasions and the plurality of paging occasions corresponding to the wake up signal correspond to a plurality of paging frames, the first information includes information indicating an index of one paging occasion of the plurality of paging occasions corresponding to the wake up signal and information indicating a system frame number of one paging frame of the plurality of paging frames corresponding to the paging occasion. The user equipment may determine a paging occasion corresponding to the wake up signal based on the above-mentioned first information so as to judge whether the wake up signal is a wake up signal corresponding to the present UE.

In an embodiment, the user equipment determines that the wake up signal corresponds to a plurality of paging occasions and the paging occasions correspond to a plurality of paging frames based on system configuration information received from the network equipment. In an embodiment, the user equipment determines that the wake up signal corresponds to a plurality of paging occasions based on an agreement of the communication protocol.

In an embodiment, after receiving the wake up signal sequence, the user equipment determines first information carried in the wake up signal sequence, and in a scenario where the wake up signal corresponds to a plurality of paging occasions and the plurality of paging occasions corresponding to the wake up signal correspond to a plurality of paging frames, the first information includes information indicating an index of one paging occasion of the plurality of paging occasions corresponding to the wake up signal and information indicating a system frame number of a first paging frame of the plurality of paging frames corresponding to the paging occasion. The user equipment may determine a paging occasion corresponding to the wake up signal based on the above-mentioned first information so as to judge whether the wake up signal is a wake up signal corresponding to the present UE.

In an embodiment, after receiving the wake up signal sequence, the user equipment determines first information carried in the wake up signal sequence, and in a scenario where the wake up signal corresponds to a plurality of paging occasions and the plurality of paging occasions corresponding to the wake up signal correspond to a plurality of paging frames, the first information includes information indicating an index of one paging occasion of the plurality of paging occasions corresponding to the wake up signal and information indicating a system frame number of a last paging frame of the plurality of paging frames corresponding to the paging occasion. The user equipment may determine a paging occasion corresponding to the wake up signal based on the above-mentioned first information so as to judge whether the wake up signal is a wake up signal corresponding to the present UE.

In an embodiment, after receiving the wake up signal sequence, the user equipment determines first information carried in the wake up signal sequence, and in a scenario where the wake up signal corresponds to a plurality of paging occasions and the plurality of paging occasions corresponding to the wake up signal correspond to a plurality of paging frames, the first information includes information indicating an index of one paging occasion of the plurality of paging occasions corresponding to the wake up signal and information indicating a system frame number of a first paging frame of the plurality of paging frames corresponding to the paging occasion. In the case where a number $N_{WUS-PO}$ of the paging occasions corresponding to the wake up signal is greater than a number $N_s$ of the paging occasions included in one paging frame in the paging cycle of the user equipment and $N_{WUS-PO}$ is an integer multiple of $N_s$, the system frame number of the first paging frame can be calculated as follows:

$$ \mathrm{SFN}_{UE} - \left\lfloor i_{PO} \middle/ N_S \right\rfloor \times T \middle/ N $$ ;

where the $i_{PO}$ represents a relative index value of a paging occasion monitored by a user equipment in a plurality of paging occasions corresponding to a wake up signal monitored by the user equipment, and the $i_{PO}$ counting starts from 0. The $i_{PO}$ is calculated by:

$$ i_{PO} = \left( \left( UE\_ID \bmod N \right) \times N_s + i\_s \right) \bmod N_{WUS-PO} $$ ,

where the $\mathrm{SFN}_{UE}$ is a system frame number of a paging frame corresponding to the user equipment, the $i\_s$ is an index of the paging occasion corresponding to the user equipment, the T is duration of a paging cycle of the user equipment, the N is a number of paging frames in the paging cycle, and the UE_ID is a sequence number used for identifying the user equipment.

In an embodiment, the user equipment determines a value of the $N_{WUS-PO}$ based on system configuration information received from a network equipment. In an embodiment, the user equipment determines a value of the $N_{WUS-PO}$ based on an agreement of the communication protocol. In an embodiment, the user equipment determines a value of the $N_s$ based on system configuration information received from the network equipment. In an embodiment, the user equipment determines a value of the $i\_s$ based on the system configuration information received from the network equipment and a UE_ID of the user equipment itself. In an embodiment, the user equipment determines a value of the $\mathrm{SFN}_{UE}$ based on the system configuration information received from the network equipment and the UE_ID of the user equipment itself.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence, which is performed by a user equipment. The method includes:

first information carried by the wake up signal sequence is determined, and in response to the wake up signal corresponding to a plurality of paging occasions, the first information includes information indicating an index of a first paging occasion of the plurality of paging occasions corresponding to the wake up signal;

and, in response to that the plurality of paging occasions corresponding to the wake up signal correspond to a plurality of paging frames, the first information includes information indicating a system frame number of one paging frame of the plurality of paging frames.

In an embodiment, after receiving the wake up signal sequence, the user equipment determines first information carried in the wake up signal sequence, and in a scenario where the wake up signal corresponds to a plurality of paging occasions and the plurality of paging occasions corresponding to the wake up signal correspond to a plurality of paging frames, the first information includes information indicating an index of a first paging occasion of the plurality of paging occasions corresponding to the wake up signal and information indicating a system frame number of one of the plurality of paging frames corresponding to the paging occasion. The user equipment may determine a paging occasion corresponding to the wake up signal based on the above-mentioned first information so as to judge whether the wake up signal is a wake up signal corresponding to the present UE.

In an embodiment, the user equipment determines that the wake up signal corresponds to a plurality of paging occasions and the plurality of paging occasions correspond to a plurality of paging frames based on system configuration information received from the network equipment. In an embodiment, the user equipment determines that the wake up signal corresponds to a plurality of paging occasions based on an agreement of the communication protocol.

In an embodiment, after receiving the wake up signal sequence, the user equipment determines first information carried in the wake up signal sequence, and in a scenario where the wake up signal corresponds to a plurality of paging occasions and the plurality of paging occasions corresponding to the wake up signal correspond to a plurality of paging frames, the first information includes information indicating an index of a first paging occasion of the plurality of paging occasions corresponding to the wake up signal and information indicating a system frame number of the first paging frame of the plurality of paging frames corresponding to the paging occasions. The user equipment may determine a paging occasion corresponding to the wake up signal based on the above-mentioned first information so as to judge whether the wake up signal is a wake up signal corresponding to the present UE.

In an embodiment, after receiving the wake up signal sequence, the user equipment determines first information carried in the wake up signal sequence, and in a scenario where the wake up signal corresponds to a plurality of paging occasions and the plurality of paging occasions corresponding to the wake up signal correspond to a plurality of paging frames, the first information includes information indicating an index of a first paging occasion of the plurality of paging occasions corresponding to the wake up signal and information indicating a system frame number of a last one of the plurality of paging frames corresponding to the paging occasions. The user equipment may determine a paging occasion corresponding to the wake up signal based on the above-mentioned first information so as to judge whether the wake up signal is a wake up signal corresponding to the present UE.

In an embodiment, after receiving the wake up signal sequence, the user equipment determines first information carried in the wake up signal sequence, and in a scenario where the wake up signal corresponds to a plurality of paging occasions and the plurality of the paging occasions corresponding to the wake up signal correspond to a plurality of paging frames, the first information includes information indicating an index of a first paging occasion of the plurality of paging occasions corresponding to the wake up signal and information indicating a system frame number of the first one of the plurality of paging frames corresponding to the paging occasions. In the case where the number $N_{WUS\text{-}PO}$ of the paging occasions corresponding to the wake up signal is greater than the number $N_s$ of the paging occasions included in one paging frame in the paging cycle of the user equipment, and the $N_{WUS\text{-}PO}$ is an integer multiple of the $N_s$, the index of the first paging occasion in the multiple paging occasions is 0, and the system frame number of the first paging frame can be calculated by the following formula:

$$\text{SFN}_{UE} - \left\lfloor \frac{i_{PO}}{N_S} \right\rfloor \times \frac{T}{N};$$

where the $i_{PO}$ represents a relative index value of a paging occasion monitored by a user equipment in a plurality of paging occasions corresponding to a wake up signal monitored by the user equipment, and the $i_{PO}$ counting starts from 0. The $i_{PO}$ is calculated by:

$$i_{PO} = \left( \left( UE\_ID \bmod N \right) \times N_s + i\_s \right) \bmod N_{WUS-PO};$$

where the $\text{SFN}_{UE}$ is a system frame number of a paging frame corresponding to the user equipment, the $i\_s$ is an index of the paging occasion corresponding to the user equipment, the T is the duration of a paging cycle of the user equipment, the N is the number of paging frames in the paging cycle, and the UE_ID is a sequence number used for identifying the user equipment.

In an embodiment, the user equipment determines a value of the $N_{WUS\text{-}PO}$ based on system configuration information received from the network equipment. In an embodiment, the user equipment determines a value of the $N_{WUS\text{-}PO}$ based on an agreement of the communication protocol. In an embodiment, the user equipment determines a value of the $N_s$ based on system configuration information received from the network equipment. In an embodiment, the user equipment determines a value of the $i\_s$ based on the system configuration information received from the network equipment and a UE_ID of the user equipment itself. In an embodiment, the user equipment determines the value of the $\text{SFN}_{UE}$ based on the system configuration information received from the network equipment and a UE_ID of the user equipment itself.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence, which is performed by a user equipment. The method includes:

determining first information carried by the wake up signal sequence, where the first information includes information indicating an index of a paging occasion corresponding to the wake up signal;

and, in response to that the plurality of paging occasions corresponding to the wake up signal correspond to a plurality of paging frames, the first information includes information indicating a system frame number of one paging frame of the plurality of paging frames.

In an embodiment, after receiving the wake up signal sequence, the user equipment determines first information carried in the wake up signal sequence, the first information including information indicating an index of a paging occasion corresponding to the wake up signal, and in a scenario where the paging occasion corresponding to the wake up signal corresponds to a plurality of paging frames, the first information further includes information indicating a system frame number of a paging frame in the plurality of paging frames corresponding to the paging occasion. The user equipment may determine a paging occasion corresponding to the wake up signal based on the above-mentioned first information so as to judge whether the wake up signal is a wake up signal corresponding to the present UE.

In an embodiment, the user equipment determines that the paging occasions correspond to a plurality of paging frames based on system configuration information received from the network equipment.

In an embodiment, after receiving the wake up signal sequence, the user equipment determines first information carried in the wake up signal sequence, where the first information includes information indicating an index of a paging occasion corresponding to the wake up signal, and in a scenario where the paging occasion corresponding to the wake up signal corresponds to a plurality of paging frames, the first information further includes information indicating a system frame number of a first one of the plurality of paging frames corresponding to the paging occasion. The user equipment may determine a paging occasion corresponding to the wake up signal based on the above-mentioned first information so as to judge whether the wake up signal is a wake up signal corresponding to the present UE.

In an embodiment, after receiving the wake up signal sequence, the user equipment determines first information carried in the wake up signal sequence, the first information including information indicating an index of a paging occasion corresponding to the wake up signal, and in a scenario where the paging occasion corresponding to the wake up signal corresponds to a plurality of paging frames, the first information further including information indicating a system frame number of a last paging frame in the plurality of paging frames corresponding to the paging occasion. The user equipment may determine a paging occasion corresponding to the wake up signal based on the above-mentioned first information so as to judge whether the wake up signal is a wake up signal corresponding to the present UE.

In an embodiment, after receiving the wake up signal sequence, the user equipment determines first information carried in the wake up signal sequence, where the first information includes information indicating an index of a paging occasion corresponding to the wake up signal, and in a scenario where the paging occasion corresponding to the wake up signal corresponds to a plurality of paging frames, the first information further includes information indicating a system frame number of a first paging frame of the plurality of paging frames corresponding to the paging occasion. In the case where the number of the paging occasions $N_{WUS\text{-}PO}$ corresponding to the wake up signal is greater than the number of the paging occasions $N_s$ included in one paging frame in the paging cycle of the user equipment and the $N_{WUS\text{-}PO}$ is an integer multiple of the $N_s$, the system frame number of the first paging frame can be calculated as follows:

$$\mathrm{SFN}_{UE} - \left\lfloor \frac{i_{PO}}{N_S} \right\rfloor \times \frac{T}{N}$$ ;

where the $i_{PO}$ represents a relative index value of a paging occasion monitored by a user equipment in a plurality of paging occasions corresponding to a wake up signal monitored by the user equipment, and the $i_{PO}$ counting starts from 0. The $i_{PO}$ is calculated by:

$$i_{PO} = \left( \left( UE\_ID \bmod N \right) \times N_s + i\_s \right) \bmod N_{WUS\text{-}PO}$$ ,

where the $\mathrm{SFN}_{UE}$ is a system frame number of a paging frame corresponding to the user equipment, the $i\_s$ is an index of the paging occasion corresponding to the user equipment, the T is duration of a paging cycle of the user equipment, the N is a number of paging frames in the paging cycle, and UE_ID is a sequence number used for identifying the user equipment.

In an embodiment, the user equipment determines a value of $N_{WUS-PO}$ based on system configuration information received from the network equipment. In an embodiment, the user equipment determines the value of the $N_{WUS-PO}$ based on an agreement of the communication protocol. In an embodiment, the user equipment determines a value of $N_s$ based on system configuration information received from the network equipment. In an embodiment, the user equipment determines a value of $i\_s$ based on the system configuration information received from the network equipment and a UE_ID of the user equipment itself. In an embodiment, the user equipment determines a value of $SFN_{UE}$ based on the system configuration information received from the network equipment and a UE_ID of the user equipment itself.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence, which is performed by a user equipment. The method includes:

determining first information carried by the wake up signal sequence, where the first information includes information indicating an index of a paging occasion corresponding to the wake up signal;

and, $N_{WUS-PO}$ is a factor or integer multiple of $N_s$,

where, the $N_{WUS-PO}$ is a number of the paging occasions corresponding to the wake up signal, the $N_s$ is a number of the paging occasions included in one paging frame in a paging cycle of the user equipment, and the $N_{WUS-PO}$ and the $N_s$ are both positive integers greater than or equal to 1.

In an embodiment, after receiving the wake up signal sequence, the user equipment determines first information carried in the wake up signal sequence, the first information including information indicating an index of a paging occasion corresponding to the wake up signal. The number of the paging occasions $N_{WUS-PO}$ corresponding to the wake up signal is a factor of the number of the paging occasions $N_s$ included in one paging frame in the paging cycle of the user equipment.

In an embodiment, after receiving the wake up signal sequence, the user equipment determines first information carried in the wake up signal sequence, the first information including information indicating an index of a paging occasion corresponding to the wake up signal. The number of the paging occasions $N_{WUS-PO}$ corresponding to the wake up signal is an integer multiple of the number of the paging occasions $N_s$ included in one paging frame in the paging cycle of the user equipment.

In an embodiment, the user equipment determines the value of the $N_{WUS-PO}$ based on system configuration information received from the network equipment. In an embodiment, the user equipment determines the value of the $N_{WUS-PO}$ based on an agreement of the communication protocol. In an embodiment, the user equipment determines the value of the $N_s$ based on system configuration information received from the network equipment.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence, which is performed by a user equipment. FIG. 2 is a flow chart of a method for determining a wake up signal sequence according to an example, as shown in FIG. 2, the method including:

step 201, an initialized scrambling sequence corresponding to the wake up signal sequence is determined;

step 202, the first information carried by the initialized scrambling sequence is determined, where the first information includes information indicating an index of a paging occasion corresponding to the wake up signal.

It is known to a person skilled in the art that a wake up signal sequence can be determined on the basis of an initialized scrambling sequence, and based on this, user equipment can also determine an initialized scrambling sequence corresponding thereto on the basis of the wake up signal sequence, and the specific determination method can be based on a corresponding relationship between the wake up signal sequence and the initialized scrambling sequence known to a person skilled in the art, which will not be described in detail herein.

In an embodiment, after receiving the wake up signal sequence, the user equipment determines an initialized scrambling sequence corresponding to the wake up signal based on the above-mentioned corresponding relationship between the wake up signal sequence and the initialized scrambling sequence. Further first information carried by the initialized scrambling sequence is determined, the first information including information indicating an index of a paging occasion corresponding to the wake up signal.

In an embodiment, after receiving the wake up signal sequence, the user equipment determines an initialized scrambling sequence corresponding to the wake up signal based on the above-mentioned corresponding relationship between the wake up signal sequence and the initialized scrambling sequence. Further first information carried by the initialized scrambling sequence is determined, the first information including information indicating an index of a paging occasion corresponding to the wake up signal. The first information further includes information indicating a system frame number of a paging frame, and the paging occasion corresponding to the wake up signal corresponds to the above-mentioned paging frame.

In the above-mentioned embodiment, the user equipment can determine a paging occasion corresponding to the wake up signal according to the wake up signal, so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

Embodiments of the present disclosure provide a method for determining a wake up signal sequence which is performed by a network equipment. FIG. 3 is a flow chart of a method for determining a wake up signal sequence according to an example, as shown in FIG. 3, the method including:

step 301, first information carried by a wake up signal sequence is determined, where the first information including information indicating an index of a paging occasion corresponding to the wake up signal.

In an embodiment, the network equipment determines first information carried by the wake up signal sequence, the first information including information indicating an index of paging occasions corresponding to the wake up signal. The network equipment generates a wake up signal sequence based on the first information and sends the generated wake up signal sequence to the user equipment.

In the above embodiment, the network equipment determines information indicating an index of paging occasions corresponding to the wake up signal and carries the information in the generated wake up signal sequence. The user equipment can determine a paging occasion corresponding to the wake up signal according to the wake up signal, so that in the case where there are a plurality of paging occasions corresponding to wake signals and the monitoring periods of wake up signals overlap, the user equipment can accurately distinguish whether the received wake up signal corresponds to the paging occasion corresponding to the present user equipment.

Embodiments of the present disclosure provide a method for determining a wake up signal sequence which is performed by a network equipment. The method includes:

first information carried by a wake up signal sequence is determined, and in response to the wake up signal corresponding to a plurality of paging occasions, the first information includes information indicating an index of one paging occasion of the plurality of paging occasions corresponding to the wake up signal.

In an embodiment, the network equipment determines first information carried by the wake up signal sequence, and in a scenario where the wake up signal corresponds to a plurality of paging occasions, the first information includes information indicating an index of one of the plurality of paging occasions corresponding to the wake up signal. The network equipment generates a wake up signal sequence based on the first information and sends the generated wake up signal sequence to the user equipment.

In an embodiment, the network equipment determines first information carried by the wake up signal sequence, and in a scenario where the wake up signal corresponds to a plurality of paging occasions, the first information includes information indicating an index of a first paging occasion of the plurality of paging occasions corresponding to the wake up signal. The network equipment generates a wake up signal sequence based on the first information and sends the generated wake up signal sequence to the user equipment.

In an embodiment, the network equipment determines first information carried by the wake up signal sequence, and in a scenario where the wake up signal corresponds to a plurality of paging occasions, the first information includes information indicating an index of a first paging occasion of the plurality of paging occasions corresponding to the wake up signal. In the case where the number of the paging occasions $N_{WUS\text{-}PO}$ corresponding to the wake up signal is less than or equal to the number of the paging occasions $N_s$ included in one paging frame in the paging cycle of the user equipment, and the $N_{WUS\text{-}PO}$ is a factor of the $N_s$, that is to say, in the case where the wake up signal corresponds to one paging frame, the index of the first paging occasion of the plurality of paging occasions can be obtained by calculation according to the following formula:

$$i\_s - i\_s \bmod N_{WUS-PO} ;$$

where the $N_{WUS\text{-}PO}$ is the number of the paging occasions corresponding to the wake up signal, the $N_s$ is the number of paging occasions included in one paging frame in a paging cycle of the user equipment, the $i\_s$ is an index of the paging occasion corresponding to the user equipment, and the $N_{WUS\text{-}PO}$ and the $N_s$ are both positive integers greater than or equal to 1.

In the case where the number of the paging occasions $N_{WUS\text{-}PO}$ corresponding to the wake up signal is greater than the number of the paging occasions $N_s$ included in one paging frame in the paging cycle of the user equipment, and the $N_{WUS\text{-}PO}$ is an integer multiple of the $N_s$, the index of the first paging occasion in the plurality of paging occasions is 0.

In an embodiment, the user equipment determines the value of $N_{WUS\text{-}PO}$ based on system configuration information received from the network equipment. In an embodiment, the user equipment determines the value of $N_{WUS\text{-}PO}$ based on an agreement of the communication protocol. In an embodiment, the user equipment determines the value of $N_s$ based on system configuration information received from the network equipment. In an embodiment, the user equipment determines the value of $i\_s$ based on the system configuration information received from the network equipment and a UE_ID of the user equipment itself.

In an embodiment, the number of the paging occasions $N_{WUS\text{-}PO}$ corresponding to the wake up signal is a factor of the number of the paging occasions $N_s$ included in one paging frame in the paging cycle of the user equipment.

In an embodiment, the number of the paging occasions $N_{WUS\text{-}PO}$ corresponding to the wake up signal is an integer multiple of the number of the paging occasions $N_s$ included in one paging frame in the paging cycle of the user equipment.

In the above embodiment, the network equipment determines information indicating an index of paging occasions corresponding to the wake up signal and carries the information in the generated wake up signal sequence. The user equipment can determine a paging occasion corresponding to the wake up signal according to the wake up signal so that in the case where there are a plurality of paging occasions corresponding to wake signals and the monitoring periods of wake up signals overlap, the user equipment can accurately distinguish whether the received wake up signal corresponds to the paging occasion corresponding to the present user equipment.

Embodiments of the present disclosure provide a method for determining a wake up signal sequence which is performed by a network equipment. The method includes:

determining first information carried by the wake up signal sequence, where the first information includes information indicating an index of a paging occasion corresponding to the wake up signal;

and the first information includes information indicating a system frame number of a paging frame, where a paging occasion corresponding to the wake up signal corresponds to the paging frame.

In an embodiment, network equipment determines first information carried by a wake up signal sequence, where the first information includes information indicating an index of a paging occasion corresponding to the wake up signal and information indicating a system frame number of a paging frame, and the paging occasion corresponding to the wake up signal corresponds to the above-mentioned paging frame. The network equipment generates a wake up signal sequence based on the first information and sends the generated wake up signal sequence to the user equipment.

In an embodiment, the network equipment determines first information carried by the wake up signal sequence, the first information including information indicating an index of paging occasions corresponding to the wake up signal. In the case where the paging occasion corresponding to the wake up signal corresponds to a plurality of paging frames, the first information further includes information indicating a system frame number of one of the plurality of paging frames. The network equipment generates a wake up signal sequence based on the first information and sends the generated wake up signal sequence to the user equipment.

In an embodiment, the network equipment determines first information carried by the wake up signal sequence, the first information including information indicating an index of paging occasions corresponding to the wake up signal. In the case where the paging occasion corresponding to the wake up signal corresponds to a plurality of paging frames, the first information further includes information indicating a system frame number of a first one of the plurality of paging frames. The network equipment generates a wake up signal sequence based on the first information and sends the generated wake up signal sequence to the user equipment.

In an embodiment, the network equipment determines first information carried by the wake up signal sequence, the first information including information indicating an index of paging occasions corresponding to the wake up signal. In the case where the paging occasion corresponding to the wake up signal corresponds to a plurality of paging frames, the first information further includes information indicating a system frame number of a first one of the plurality of paging frames. In the case where the number of the paging occasions $N_{WUS\text{-}PO}$ corresponding to the wake up signal is greater than the number of the paging occasions $N_s$ included in one paging frame in the paging cycle of the user equipment and the $N_{WUS\text{-}PO}$ is an integer multiple of the $N_s$, the system frame number of the first paging frame can be calculated as follows:

$$\mathrm{SFN}_{UE} - \left\lfloor \frac{i_{PO}}{N_S} \right\rfloor \times \frac{T}{N} \; ;$$

where the $i_{PO}$ represents a relative index value of a paging occasion monitored by a user equipment in a plurality of paging occasions corresponding to a wake up signal monitored by the user equipment, and the $i_{PO}$ counting starts from 0. The $i_{PO}$ is calculated by:

$$i_{PO} = \left( \left( UE\_ID \bmod N \right) \times N_s + i\_s \right) \bmod N_{WUS-PO} \; ;$$

where the $\mathrm{SFN}_{UE}$ is a system frame number of a paging frame corresponding to the user equipment, the $i\_s$ is an index of the paging occasion corresponding to the user equipment, the T is duration of a paging cycle of the user equipment, the N is the number of paging frames in the paging cycle, and the UE_ID is a sequence number used for identifying the user equipment.

In an embodiment, the user equipment determines the value of the $N_{WUS-PO}$ based on system configuration information received from the network equipment. In an embodiment, the user equipment determines the value of the $N_{WUS-PO}$ based on an agreement of the communication protocol. In an embodiment, the user equipment determines the value of the $N_s$ based on system configuration information received from the network equipment. In an embodiment, the user equipment determines the value of the $i\_S$ based on the system configuration information received from the network equipment and its own UE_ID. In an embodiment, the user equipment determines the value of the $\mathrm{SFN}_{UE}$ based on the system configuration information received from the network equipment and its own UE ID.

In the above embodiment, the network equipment determines information indicating an index of paging occasions corresponding to the wake up signal and carries the information in the generated wake up signal sequence. The user equipment can determine a paging occasion corresponding to the wake up signal according to the wake up signal, so that in the case where there are a plurality of paging occasions corresponding to wake signals and the monitoring periods of wake up signals overlap, the user equipment can accurately distinguish whether the received wake up signal corresponds to the paging occasion corresponding to the present user equipment.

Embodiments of the present disclosure provide a method for determining a wake up signal sequence which is performed by a network equipment. The method includes:
determining first information carried by an initialized scrambling sequence corresponding to a wake up signal sequence, where the first information includes information indicating an index of a paging occasion corresponding to the wake up signal.

In an embodiment, the network equipment determines first information carried by an initialized scrambling sequence corresponding to the wake up signal sequence, the first information including information indicating an index of a paging occasion corresponding to the wake up signal. The network equipment generates a wake up signal sequence based on the first information and sends the generated wake up signal sequence to the user equipment.

The corresponding relationship between the wake up signal sequence and the initial scrambling sequence known to those skilled in the art is not described in detail herein.

In the above embodiment, the network equipment determines information indicating an index of paging occasions corresponding to the wake up signal and carries the information in the generated wake up signal sequence. The user equipment can determine a paging occasion corresponding to the wake up signal according to the wake up signal, so that in the case where there are a plurality of paging occasions corresponding to wake signals and the monitoring periods of wake up signals overlap, the user equipment can accurately distinguish whether the received wake up signal corresponds to the paging occasion corresponding to the present user equipment.

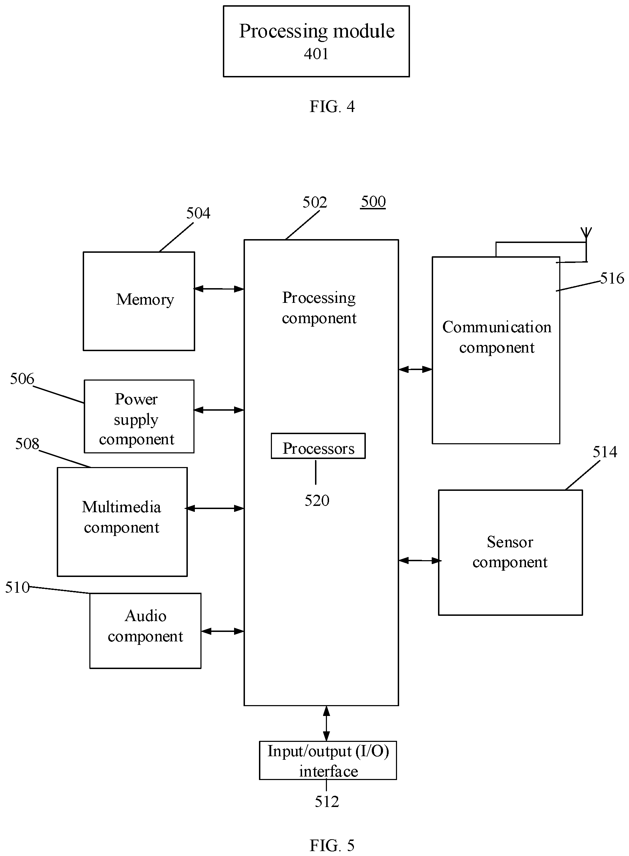

An embodiment of the present disclosure provides an apparatus for determining a wake up signal sequence, applied to the user equipment, as shown in FIG. 4, including:
a processing module 401 configured to determine first information carried by a wake up signal sequence, the first information including information indicating an index of a paging occasion corresponding to the wake up signal.

The disclosed embodiments provide an apparatus for determining a wake up signal sequence, as applied to network equipment, including:
a processing module, configured to determine first information carried by a wake up signal sequence, the first information including information indicating an index of a paging occasion corresponding to the wake up signal.

The disclosed embodiments provide a mobile terminal, including:

a processor;

a memory, for storing processor-executable instructions;

wherein the processor is configured to execute executable instructions in the memory to implement the steps of the method for determining a wake up signal sequence described above.

The disclosed embodiment provides network-side equipment, including:

a processor;

a memory, for storing processor-executable instructions;

wherein the processor is configured to execute executable instructions in the memory to implement the steps of the method for determining a wake up signal sequence described above.

The disclosed embodiments provide a non-transitory computer-readable storage medium having stored thereon executable instructions that, when executed by a processor, perform the above-described steps of determining a wake up signal sequence.

FIG. 5 is a block diagram of a device 500 for determining a wake up signal sequence according to an example. For example, the device 500 may be a mobile phone, a computer, a digital broadcast terminal, a messaging device, a game console, a tablet device, a medical device, an exercise device, a personal digital assistant, etc.

Referring to FIG. 5, device 500 may include one or more of the following components: processing component 502, memory 504, power supply component 506, multimedia component 508, audio component 510, input/output (I/O) interface 512, sensor component 514, and communication component 516.

The processing component 502 generally controls the overall operation of the device 500, such as operations associated with display, telephone calls, data communications, camera operations, and recording operations. The processing component 502 can include one or more processors 520 to execute instructions to perform all or part of the steps of the methods described above. In addition, the processing component 502 can include one or more modules to facilitate interaction between the processing component 502 and other components. For example, the processing component 502 can include a multimedia module to facilitate interaction between the multimedia component 508 and the processing component 502.

Memory 504 is configured to store various types of data to support operation at equipment 500. Examples of such data include instructions for any application or method operating on device 500, contact data, phonebook data, messages, pictures, videos, etc. The memory 504 may be implemented by any type or combination of volatile or non-volatile memory devices, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disks.

Power supply component 506 provides power to the various components of device 500. Power supply component 506 can include a power management system, one or more power sources, and other components associated with generating, managing, and distributing power for device 500.

The multimedia component 508 includes a screen that provides an output interface between the device 500 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, slides, and gestures on the touch panel. The touch sensor may not only sense the boundary of a touch or slide action but also detect the duration and pressure associated with the touch or slide operation. In some embodiments, the multimedia component 508 includes a front camera and/or a rear camera. When the equipment 500 is in an operating mode, such as a shooting mode or a video mode, the front camera and/or the rear camera may receive external multimedia data. Each of the front camera and the rear camera may be a fixed optical lens system or have a focal length and an optical zoom capability.

The audio component 510 is configured to output and/or input audio signals. For example, the audio component 510 includes a MIC configured to receive external audio signals when the device 500 is in an operational mode, such as a call mode, a recording mode, and a voice recognition mode. The received audio signal may be further stored in memory 504 or transmitted via communication component 516. In some embodiments, the audio component 510 also includes a speaker for outputting audio signals.

The I/O interface 512 provides an interface between the processing component 502 and a peripheral interface module, which may be a keyboard, click wheel, button, etc. These buttons may include, but are not limited to: a home button, a volume button, a start button, and a lock button.

The sensor component 514 includes one or more sensors for providing status assessments of various aspects to the device 500. For example, the sensor component 514 may detect an on/off state of the device 500, a relative positioning of components, such as a display and keypad of the device 500, the sensor component 514 also can detect a change in position of the device 500 or a component of the device 500, the presence or absence of user contact with the device 500, an orientation or acceleration/deceleration of the device 500, and a temperature change of the device 500. The sensor component 514 may include a proximity sensor configured to detect the presence of a nearby object in the absence of any physical contact. The sensor component 514 may also include a light sensor, such as a CMOS or CCD image sensor, for use in imaging applications. In some embodiments, the sensor component 514 may also include an acceleration sensor, a gyroscope sensor, a magnetic sensor, a pressure sensor, or a temperature sensor.

The communication component 516 is configured to facilitate wired or wireless communication between the device 500 and other devices. The device 500 may access a wireless network based on a communication standard, such as WiFi, 2G, or 3G, or a combination thereof. In one example, the communication component 516 receives a broadcast signal or broadcast-related information from an external broadcast management system via a broadcast channel. In one example, the communication component 516 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology, and other technologies.

In examples, device 500 may be implemented with one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic components for performing the methods described above.

In an example, a non-transitory computer-readable storage medium including instructions, such as memory 504 including instructions, executable by processor 520 of device 500 to perform the method is also provided. For example, the non-transitory computer-readable storage medium may be a ROM, a random access memory (RAM), a CD-ROM, a magnetic tape, a floppy disk, an optical data storage device, etc.

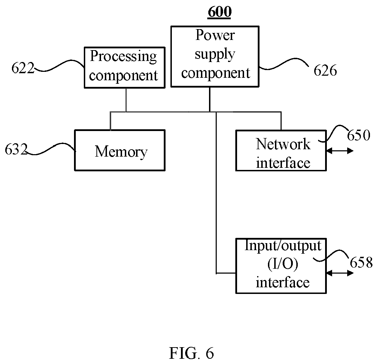

FIG. 6 is a block diagram of a device 600 for determining a wake up signal sequence according to an example. For example, device 600 can be provided as a base station. Referring to FIG. 6, device 600 includes a processing component 622 that further includes one or more processors and memory resources represented by memory 632 for storing instructions, such as applications, executable by processing component 622. The applications stored in memory 632 may include one or more modules each corresponding to a set of instructions. Further, the processing component 622 is configured to execute instructions to perform the above-described access method for the unlicensed channel.

The device 600 can also include a power supply component 626 configured to perform power supply management of the device 600, a wired or wireless network interface 650 configured to connect the device 600 to a network, and an input/output (I/O) interface 659. Device 600 may operate based on an operating system stored in memory 632, such as Windows ServerTM, Mac OS XTM, UnixTM, LinuxTM, FreeBSDTM, or the like.

Other embodiments of the disclosed embodiments will be apparent to those skilled in the art from consideration of the specification and practice of the invention disclosed herein. This application is intended to cover any variations, uses, or adaptations of the disclosed embodiments following, in general, the principles of the disclosed embodiments and including such departures from the present disclosure as come within the known or customary practice in the art to which the disclosed embodiments pertains. It is intended that the specification and examples be considered as exemplary only, with a true scope and spirit of the disclosed embodiments being indicated by the following claims.

It is to be understood that the embodiments of the present disclosure are not limited to the precise arrangements described above and shown in the accompanying drawings and that various modifications and changes may be made without departing from the scope thereof. The scope of the disclosed embodiments is limited only by the following claims.

INDUSTRIAL APPLICABILITY

The user equipment can determine a paging occasion corresponding to the wake up signal according to the wake up signal so that in the case where there are a plurality of paging occasions corresponding to wake signals and the monitoring periods of the wake up signals overlap, the user equipment can accurately distinguish whether the received wake up signal corresponds to the paging occasion corresponding to the present user equipment.

**Claims**

1. A method for determining a wake up signal sequence, performed by a user equipment, comprising:
   determining first information carried by the wake up signal sequence, the first information comprising information indicating an index of a paging occasion corresponding to the wake up signal.

2. The method of claim 1, wherein
   in response to the wake up signal corresponding to a plurality of paging occasions, the first information comprises information indicating an index of one paging occasion of the plurality of paging occasions to which the wake up signal corresponds.

3. The method of claim 1, wherein
in response to the wake up signal corresponding to a plurality of paging occasions, the first information comprises information indicating an index of a first paging occasion of the plurality of paging occasions to which the wake up signal corresponds.

4. The method of claim 3, wherein

in response to $N_{WUS-PO}$ being less than or equal to $N_s$ and the $N_{WUS-PO}$ being a factor of the $N_s$, the index of the first paging occasion of the plurality of paging occasions is:
$i\_s - i\_s \bmod N_{WUS-PO}$;
wherein, the $N_{WUS-PO}$ is a number of the plurality of paging occasions corresponding to the wake up signal, the $N_s$ is a number of one or more paging occasions comprised in one paging frame in a paging cycle of the user equipment, the $i\_s$ is an index of the paging occasion corresponding to the user equipment, and the $N_{WUS-PO}$ and the $N_s$ are both positive integers greater than or equal to 1.

5. The method of claim 3, wherein

in response to $N_{WUS-PO}$ being greater than $N_s$ and the $N_{WUS-PO}$ being an integer multiple of the $N_s$, the index of the first paging occasion of the plurality of paging occasions is 0;
wherein, the $N_{WUS-PO}$ is a number of the plurality of paging occasions corresponding to the wake up signal, the $N_s$ is a number of the one or more paging occasions comprised in one paging frame in a paging cycle of the user equipment, the $N_{WUS-PO}$ and the $N_s$ are both positive integers greater than or equal to 1.

6. The method of claim 1, wherein
the first information comprises information indicating a system frame number of a paging frame, wherein the paging occasion corresponding to the wake up signal corresponds to the paging frame.

7. The method of any one of claims 2, 3, and 6, wherein
in response to that the plurality of paging occasions corresponding to the wake up signal correspond to a plurality of paging frames, the first information comprises information indicating a system frame number of one paging frame of the plurality of paging frames.

8. The method of claim 7, wherein
the first information comprises information indicating a system frame number of a first paging frame of the plurality of paging frames.

9. The method of claim 8, wherein

in response to $N_{WUS-PO}$ being greater than $N_s$ and the $N_{WUS-PO}$ being an integer multiple of the $N_s$, the system frame number of the first paging frame of the plurality of paging frames is:

$$\mathrm{SFN}_{UE} - \left\lfloor i_{PO} \middle/ N_S \right\rfloor \times T \middle/ N \ ;$$

wherein, the $i_{PO} = ((UE\_ID \bmod N) \times N_s + i\_s) \bmod N_{WUS-PO}$, and the $\mathrm{SFN}_{UE}$ is a system frame number of a paging frame corresponding to the user equipment, the $N_{WUS-PO}$ is a number of the paging occasions corresponding to the wake up signal, the $N_s$ is a number of one or more paging occasions comprised in one paging frame in a paging cycle of the user equipment, the $i\_s$ is an index of the paging occasion corresponding to the user equipment, the T is duration of the paging cycle of the user equipment, the N is a number of one or more paging frames in the paging cycle, and the UE\_ID is a serial number for identifying the user equipment, and the $N_{WUS-PO}$ and the $N_s$ are both positive integers greater than or equal to 1.

10. The method of claim 1, wherein

$N_{WUS-PO}$ is a factor or integer multiple of $N_s$,

wherein, the $N_{WUS\text{-}PO}$ is a number of the paging occasions corresponding to the wake up signal, the $N_s$ is a number of one or more paging occasions comprised in one paging frame in a paging cycle of the user equipment, and the $N_{WUS\text{-}PO}$ and the $N_s$ are both positive integers greater than or equal to 1.

11. The method of claim 1, wherein the determining first information carried by the wake up signal sequence comprises:

   determining an initialized scrambling sequence corresponding to the wake up signal sequence; and
   determining the first information carried by the initialized scrambling sequence.

12. An apparatus for determining a wake up signal sequence, applied to user equipment, comprising:
   a processing module, configured to determine first information carried by the wake up signal sequence, the first information comprising information indicating an index of a paging occasion corresponding to the wake up signal.

13. A mobile terminal, comprising:

   a processor;
   a memory, for storing processor-executable instructions;
   wherein the processor is configured to execute executable instructions in the memory to perform the steps of the method for determining a wake up signal sequence of any one of claims 1 to 11.

14. A non-transitory computer-readable storage medium, having stored thereon executable instructions which, when executed by a processor, carry out the steps of determining a wake up signal sequence of any one of claims 1 to 11.

First information carried by the wake up signal sequence is determined, and the first information includes information indicating an index of a paging occasion corresponding to the wake up signal

101

FIG. 1

An initialized scrambling sequence corresponding to the wake up signal sequence is determined

201

The first information carried by the initialized scrambling sequence is determined, where the first information includes information indicating an index of a paging occasion corresponding to the wake up signal

202

FIG. 2

First information carried by a wake up signal sequence is determined, where the first information includes information indicating an index of a paging occasion corresponding to the wake up signal

301

FIG. 3

Processing module

401

FIG. 4

502  500

504

Memory

Processing component

Communication component

516

506

Power supply component

508

Multimedia component

Processors

520

Audio component

510

Sensor component

514

Input/output (I/O) interface

512

FIG. 5

**600**

FIG. 6

## INTERNATIONAL SEARCH REPORT

| | International application No. |
|---|---|
| | **PCT/CN2022/077484** |

**A. CLASSIFICATION OF SUBJECT MATTER**

H04W 68/02(2009.01)i

According to International Patent Classification (IPC) or to both national classification and IPC

**B. FIELDS SEARCHED**

Minimum documentation searched (classification system followed by classification symbols)

H04W; H04L; H04M; H04Q; H04B

Documentation searched other than minimum documentation to the extent that such documents are included in the fields searched

Electronic data base consulted during the international search (name of data base and, where practicable, search terms used)

CNTXT, CNKI, 3GPP, WPABSC, ENTXTC: 唤醒信号, 序列, 组, 用户, 寻呼, 时间, 时机, 索引, 周期, 帧, wake, up, signal, sequence, group, UE, paging, time, opportunity, index, period, frame

**C. DOCUMENTS CONSIDERED TO BE RELEVANT**

| Category* | Citation of document, with indication, where appropriate, of the relevant passages | Relevant to claim No. |
|---|---|---|
| Y | CN 110536382 A (ZTE CORP.) 03 December 2019 (2019-12-03)<br>description, paragraphs 45-117, and figures 1-9 | 1-14 |
| Y | CN 113170413 A (ALCATEL-LUCENT SHANGHAI BELL CO., LTD. et al.) 23 July 2021 (2021-07-23)<br>description, paragraphs 21-70, and figures 1-4 | 1-14 |
| Y | CN 110972237 A (SPREADTRUM SEMICONDUCTOR (NANJING) CO., LTD.) 07 April 2020 (2020-04-07)<br>description, paragraphs 46-119, and figures 1-11 | 1, 12-14 |
| Y | WO 2019101539 A1 (NOKIA TECHNOLOGIES OY) 31 May 2019 (2019-05-31)<br>description, paragraphs 7-20, and figures 1-7B | 1, 12-14 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 November 2022** | **10 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/077484**

| Patent document cited in search report | | | Publication date (day/month/year) | Patent family member(s) | | | Publication date (day/month/year) |
|---|---|---|---|---|---|---|---|
| CN | 110536382 | A | 03 December 2019 | None | | | |
| CN | 113170413 | A | 23 July 2021 | None | | | |
| CN | 110972237 | A | 07 April 2020 | None | | | |
| WO | 2019101539 | A1 | 31 May 2019 | US | 2020359324 | A1 | 12 November 2020 |
| | | | | US | 2022046544 | A1 | 10 February 2022 |
| | | | | CN | 111587590 | A | 25 August 2020 |
| | | | | EP | 3714638 | A1 | 30 September 2020 |

Form PCT/ISA/210 (patent family annex) (January 2015)